# FASCICULE DE BREVET EUROPEEN

(11) **EP 3 106 959 B1**
(45) Date de publication et mention de la délivrance du brevet: **25.03.2020**
(21) Numéro de dépôt: 16173188.0
(22) Date de dépôt: 06.06.2016
(51) Int. Cl.: G05D 23/19, G01C 21/16

(54) **DRONE COMPORTANT DES MOYENS PERFECTIONNÉS DE COMPENSATION DU BIAIS DE LA CENTRALE INERTIELLE EN FONCTION DE LA TEMPÉRATURE**
DROHNE, DIE PERFEKTIONIERTE MITTEL ZUR KOMPENSATION DER VERZERRUNG DES TRÄGHEITSNAVIGATIONSSYSTEMS IN ABHÄNGIGKEIT VON DER TEMPERATUR UMFASST
DRONE COMPRISING IMPROVED MEANS TO COMPENSATE FOR THE BIAS OF THE INERTIAL UNIT IN ACCORDANCE WITH THE TEMPERATURE

(30) Priorité: 16.06.2015 FR 1555455
(43) Date de publication de la demande: 21.12.2016
(73) Titulaire: Parrot Drones, 75010 Paris (FR)
(72) Inventeur: QUADRAT, Quentin, 93260 Les Lilas (FR); CHAPERON, Cédric, 75019 Paris (FR); SEYDOUX, Henri, 75017 Paris (FR)
(74) Mandataire: Dupuis-Latour, Dominique

(56) Documents cités:
- EP-A1- 2 644 240
- LUCA PETRICCA ET AL: "Design, fabrication and test of an embedded lightweight kinematic autopilot (ELKA)", INTERNATIONAL JOURNAL OF INTELLIGENT UNMANNED SYSTEMS, vol. 2, no. 2, 6 mai 2014 (2014-05-06), pages 140-150, XP055267913, ISSN: 2049-6427, DOI: 10.1108/IJIUS-10-2013-0022
- KIM J D ET AL: "Efficient control system for PCR chips", MICROFLUIDICS, BIOMEMS, AND MEDICAL MICROSYSTEMS IX, SPIE, 1000 20TH ST. BELLINGHAM WA 98225-6705 USA, vol. 7929, no. 1, 10 février 2011 (2011-02-10), pages 1-9, XP060011017, DOI: 10.1117/12.873572

## Description

L'invention concerne les engins volants motorisés tels que les drones, notamment les drones à voilure tournante de type quadricoptère.

*L'AR.Drone 2.0* ou le *Bebop Drone* de Parrot SA, Paris, France sont des exemples typiques de tels quadricoptères. Ils sont équipés d'une série de capteurs (accéléromètres, gyromètres 3 axes, altimètres), d'une caméra frontale captant une image de la scène vers laquelle est dirigé le drone et d'une caméra de visée verticale captant une image du terrain survolé. Ils sont pourvus de rotors multiples entrainés par des moteurs respectifs commandables de manière différenciée afin de piloter le drone en attitude et en vitesse. Divers aspects de ces drones sont décrits, entre autres, dans les EP 2 364 757 A1, EP 2 400 460 A1, EP 2 613 213 A1 ou encore EP 2 644 240 A1 EP 2 613 214 A1 (Parrot SA).

Pour des drones de loisir, la centrale inertielle ou IMU (*Inertial Measurement Unit*) est réalisée à partir de composants MEMS à faible coût, dont le problème principal est leur sensibilité à la température, car ils ne corrigent pas d'eux-mêmes les valeurs délivrées en sortie en fonction de la température des capteurs.

Or la température de l'IMU peut varier de façon importante, typiquement entre +30°C et +60°C au cours d'une même utilisation. En effet, en début d'utilisation la température de l'IMU est proche de la température ambiante, mais en cours d'utilisation l'échauffement des composants et notamment du processeur entraine une élévation de la température à l'intérieur du corps du drone. En sens inverse, la mise en marche des moteurs et un vol rapide entrainent un flux d'air froid ayant tendance à abaisser cette température, qui pourra remonter ensuite à des valeurs beaucoup plus élevées lorsque le drone se posera au sol, etc.

Ces effets perturbateurs sont d'autant plus marqués que les composants générateurs de chaleur (processeur, puce radio, MOSFETs de commutation des moteurs, etc.) sont montés sur la même carte de circuit que l'IMU, ce qui tend à accélérer la diffusion des calories.

De fait, l'erreur des signaux gyrométriques (et, de même, des signaux accélérométriques) délivrés par l'IMU présente une dérive (biais) à la fois importante (plusieurs degrés d'angle par seconde) et variable avec la température. De plus, les variations de température des capteurs sont susceptibles de provoquer un effet d'hystérésis sur la dérive de ces derniers, ce qui rend imprécise la correction en continu du biais.

Pour compenser ce biais, l'IMU fait l'objet en usine d'une procédure de calibration, consistant à faire varier la température ambiante de façon contrôlée, à relever la température interne de l'IMU (température de puce, donnée par un capteur interne à l'IMU), et à mesurer le biais correspondant. On peut ainsi déterminer une caractéristique biais/température, généralement une caractéristique non linéaire modélisable par un polynôme. Les paramètres descripteurs de cette caractéristique (les coefficients du polynôme) sont conservés en mémoire et seront utilisés ultérieurement pour corriger en temps réel le biais de la mesure délivrée par les capteurs, en fonction de la température relevée à un moment donné.

Cette procédure est applicable à un drone muni d'un capteur de température de puce interne à l'IMU, comme celui décrit par exemple dans l'article de L Petriccia et al., "Design, fabrication and test of an embedded lightweight kinematic autopilot (ELKA)", International Journal of Intelligent Unmanned Systems, Vol. 2, mai 2014, pp.140-150.

L'article de X. Niu et al. "Fast Thermal Calibration of Low-Grade Inertial Sensors and Inertial Measurements Units", Sensors, 2013, 13, pp. 12192-12217, décrit une technique de calibration telle que celle exposée plus haut, et propose notamment, au lieu de laisser se stabiliser la température ambiante, de faire varier de façon progressive cette température en suivant une rampe continue. Cette technique de rampe de température permet, tout en conservant une précision de calibration suffisante, de réduire à environ 3 heures le processus de calibration.

Mais cette durée est encore excessive pour des productions en grande série de drones, et il subsiste le besoin d'une méthode de calibration plus rapide, typiquement réduite à quelques minutes seulement, qui soit compatible avec des cadences de production élevées en usine.

Il serait également souhaitable de pouvoir réitérer la calibration ultérieurement, sur commande de l'utilisateur, sans que celui-ci n'ait à mettre en œuvre une instrumentation particulière, et sans que la durée de cette recalibration ne soit rédhibitoire.

Enfin, dans tous les cas, il apparait souhaitable, pour améliorer la qualité des mesures d'attitude du drone en cours d'utilisation, de minimiser les fluctuations de température pendant le vol entre des environnements froids et chauds, et de prendre en compte de façon efficace la température mesurée de la puce de l'IMU pour corriger en temps réel le biais en fonction de la caractéristique biais/température obtenue et mémorisée lors de la calibration préalable effectuée en usine.

Dans un domaine tout à fait différent, qui est celui des analyses biologiques moléculaires impliquant une amplification génique *in vitro* de l'ADN par une technique PCR (*Polymerase Chain Reaction,* réaction en chaine par polymérase), on peut utiliser des biopuces de type *"Lab-on-a-chip",* comme cela est décrit par exemple dans un article de Kim et al. "Efficient Control Systems for PCR Chips", Microfluidics, BioMEMS and Medical Microsystems IX, publié dans les Proceedings of SPIE, Vol. 7929, no. 1, fév. 2011, pp. 1-9. La biopuce PCR décrite est munie d'un système de régulation de la température permettant d'ajuster de façon précise les différentes températures correspondant aux étapes successives de la réaction PCR (dénaturation, renaturation et extension) au cours de chaque cycle du protocole d'analyse.

Toutefois, ces aspects ne sont pas ceux du domaine de l'invention, qui concerne l'amélioration du comportement d'une centrale inertielle (IMU) d'un drone, notamment la correction du biais gyrométrique par une procédure appropriée, efficace et rapide, de calibration préalable.

Pour résoudre les problèmes précités, propres à une centrale inertielle de drone, l'invention propose un drone comprenant, de manière en elle-même connue notamment d'après l'article précité de Petriccia et al., une carte de circuit principale sur laquelle sont montés des composants électroniques ainsi qu'une centrale inertielle, IMU, comprenant des capteurs gyrométriques de mesure des rotations instantanées du drone dans un repère absolu, et/ou des capteurs accélérométriques de mesure des accélérations du drone dans ce repère, l'IMU incluant un capteur de température interne délivrant un signal de température de puce.

De façon caractéristique de l'invention, il est en outre prévu :
- un composant chauffant monté sur la carte de circuit au voisinage de l'IMU ;
- un guide thermique incorporé à la carte de circuit, ce guide thermique s'étendant entre le composant chauffant et l'IMU de manière à permettre un transfert à l'IMU de la chaleur produite par le composant chauffant ; et
- un circuit de régulation thermique, recevant en entrée le signal de température de puce et un signal de température de consigne prédéterminé, et délivrant en sortie un signal de pilotage du composant chauffant, de manière à contrôler l'apport de chaleur à l'IMU en fonction de l'écart entre température de puce et température de consigne.

Selon diverses caractéristiques subsidiaires avantageuses :
- il est en outre prévu une mémoire, conservant des valeurs d'un polynôme approximant une caractéristique biais/température de puce de l'IMU, et un circuit de correction d'erreur thermique apte à appliquer aux signaux bruts délivrés par les capteurs gyrométriques et/ou accélérométriques de l'IMU des corrections de biais en fonction de la température de puce, ces corrections étant basées sur les valeurs de polynôme conservées dans la mémoire ;
- le guide thermique est une couche plane métallique incorporée à la carte de circuit et s'étendant sous l'IMU et sous le composant chauffant, notamment un plan de masse électrique de l'IMU et du composant chauffant, relié à la masse commune de la carte de circuit ;
- le composant chauffant est un transistor bipolaire associé à un étage de polarisation contrôlée de la base de ce transistor, en fonction du signal de pilotage délivré par le circuit de régulation thermique ; et
- le signal de pilotage délivré par le circuit de régulation thermique est un signal PWM dont le rapport cyclique est modulé en fonction de l'écart entre la température de puce et la température de consigne.

L'invention a également pour objet un procédé de calibration de l'IMU d'un tel drone, comprenant, de façon caractéristique, les étapes de :
a) pilotage du composant chauffant de manière à générer une rampe de température de puce variant progressivement d'une température initiale à une température finale ;
b) pendant cette rampe de température, relevé des valeurs de biais de l'IMU pour une pluralité de valeurs de température de puce, et établissement d'une caractéristique biais/température ;
c) recherche d'un polynôme approximant au plus près la caractéristique obtenue à l'étape b) ; et
d) mémorisation des valeurs du polynôme trouvé à l'étape c), en tant que valeurs de correction de biais de l'IMU en fonction de la température de puce.

Selon diverses caractéristiques subsidiaires avantageuses de ce procédé :
- la température initiale est une température ambiante et la température finale est une température nominale de fonctionnement de l'IMU ;
- la durée de la rampe de température de l'étape b), de la température initiale à la température finale, est inférieure à 3 minutes ;
- l'étape b) est exécutée dans une configuration statique de l'IMU, et il est en outre prévu, après l'étape d), une calibration dynamique de l'I-MU, comprenant des étapes de :
   e) mise en place de la carte de circuit sur un support tournant et application de rotations prédéterminées à l'IMU ; et
   f) pendant ces rotations prédéterminées, relevé des signaux bruts délivrés par les capteurs gyrométriques de l'IMU, et application à ces signaux bruts d'une correction thermique en fonction de la température de puce, ces corrections étant basées sur les valeurs de polynôme mémorisées à l'étape d) ;
- le composant chauffant est désactivé pendant les étapes e) et f).

On va maintenant décrire un exemple de mise en œuvre de la présente invention, en référence aux dessins annexés où les mêmes références désignent d'une figure à l'autre des éléments identiques ou fonctionnellement semblables.
La Figure 1 est une vue en perspective éclatée d'un drone montrant, dissociés, les différents éléments internes de celui-ci.
La Figure 2 est une vue partielle, agrandie, de la région de la carte de circuit portant l'IMU et le composant chauffant.
La Figure 3 est un détail du composant chauffant et de son circuit de pilotage.
La Figure 4 montre la chaine d'éléments du circuit de régulation thermique de la température.
La Figure 5 est un diagramme de processus explicitant les différentes fonctions de calibration, de régulation thermique et de correction de biais mises en œuvre par l'invention.

On va maintenant décrire un exemple de réalisation et de mise en œuvre de l'invention.

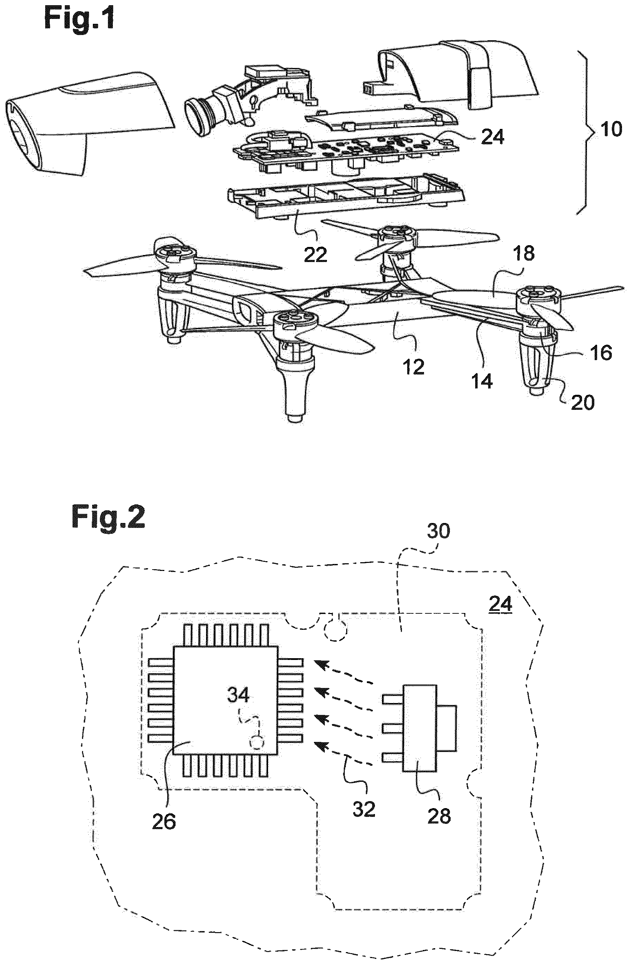

Sur la Figure 1, on a représenté un drone de type quadricoptère, avec un corps de drone 10 comprenant en partie inférieure un châssis 12 solidaire de quatre bras de liaison 14 rayonnant à partir du châssis. Chaque bras est équipé à son extrémité distale d'un bloc propulseur 16 comprenant un moteur entrainant en rotation une hélice 18. En partie inférieure, le bloc propulseur 16 est prolongé par un étrier formant pied 20 sur lequel pourra reposer au sol le drone à l'arrêt.

Le corps de drone comprend une platine 22 destinée à recevoir la carte de circuit principale 24 portant la quasi-totalité des composants électroniques du drone, y compris la centrale inertielle de celui-ci. La platine 22 se présente sous forme d'un élément monobloc en matériau métallique léger et fait fonction de refroidisseur pour évacuer les calories excédentaires de certains composants fortement générateurs de chaleur tels que le processeur principal, la puce radio, les MOSFETs de commutation des moteurs, etc. L'effet de refroidissement est accru par les flux d'air résultant des effets aérodynamiques, et éventuellement par mise en route d'un ventilateur notamment lorsque le drone ne vole pas.

La Figure 2 est une vue agrandie de la carte de circuit principale 24, à l'endroit où se trouve implantée la centrale inertielle 26. Cette centrale inertielle (IMU) est un composant incorporant un gyromètre trois axes et un accéléromètre trois axes.

De façon caractéristique, il est prévu à proximité de l'IMU 26 un composant chauffant 28 susceptible de produire, de façon contrôlée, de l'énergie thermique. Cette énergie est destinée à être apportée à l'IMU 26, par l'intermédiaire d'un élément thermiquement conducteur 30, qui est par exemple une couche plane métallique (couche de cuivre) incorporée à la carte de circuit principale et s'étendant à la fois sous l'IMU 26 et sous le composant chauffant 28. Cette couche plane métallique joue le rôle de guide thermique entre le composant chauffant 28 et l'IMU 26 de manière à permettre un transfert (symbolisé par les flèches 32) à l'IMU de la chaleur produite par le composant chauffant.

On notera que l'IMU incorpore un capteur 34 délivrant un signal de mesure de sa température interne (température de puce de l'IMU). Comme cela sera exposé en détail plus bas, ce signal θ°_{puce} sera utilisé pour assurer une régulation thermique par activation contrôlée du composant chauffant 28.

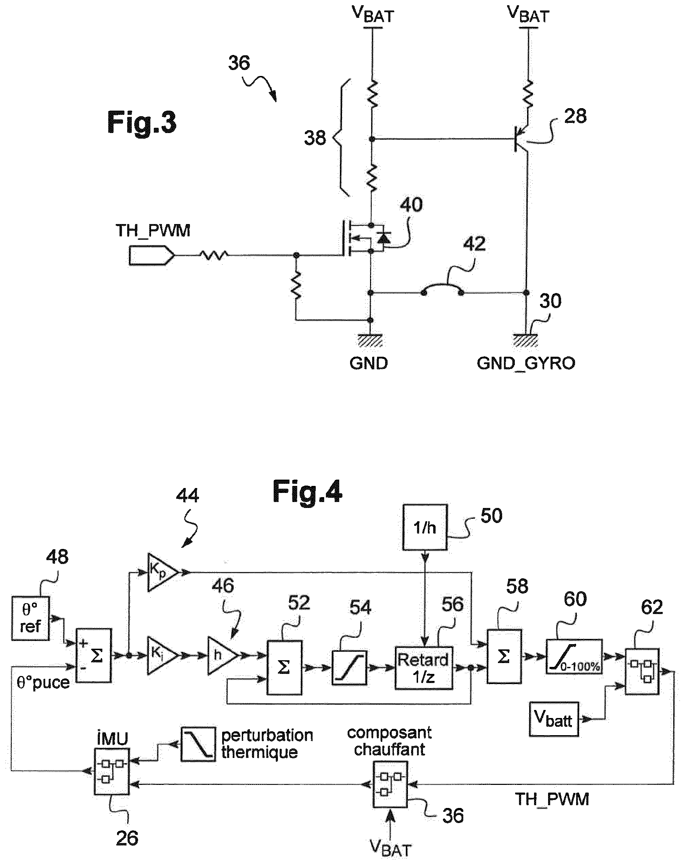

La Figure 3 illustre le composant chauffant 28 et son étage de pilotage 36. Le composant 28 peut être une simple résistance mais, comme illustré, il est de préférence constitué par un transistor bipolaire associé à un étage de polarisation 38 de la base de ce transistor. La polarisation est ajustée de manière à faire fonctionner le transistor 28 en mode résistif, le dégagement de chaleur se produisant essentiellement au niveau du collecteur. Le transistor est par exemple un PNP de puissance *2STN2550* de STMicroelectronics.

Le pont diviseur 38 de polarisation de la base du transistor 28 est commandé en "tout ou rien" par un transistor de commutation 40, par exemple un MOSFET Canal N dont la grille reçoit un signal numérique TH-PWM, qui est un signal binaire de type PWM (modulation par largeur d'impulsions) dont le rapport cyclique (*Duty Cycle*) est compris entre 0 et 100 %. Il est ainsi possible de commander de manière à la fois très fine et très réactive la mise en conduction du transistor 28, et donc la quantité de chaleur dégagée par celui-ci, entre un minimum et un maximum selon le rapport cyclique du signal TH_PWM.

La couche plane métallique 30 formant guide thermique de la carte de circuit principale 24 est avantageusement un plan de masse électrique GND_GYRO commun à l'IMU 26 et au composant chauffant 28, cette masse GND_GYRO étant reliée à la masse commune GND de la carte de circuit principale par un *strap* 42.

La Figure 4 illustre le circuit de régulation thermique permettant de contrôler la température de l'IMU. On notera que, bien que ces schémas soient présentés sous forme de schémas par blocs selon un formalisme normalisé, la mise en œuvre des différentes fonctions est essentiellement logicielle, cette représentation n'ayant qu'un caractère illustratif.

Ce circuit de régulation est basé sur un asservissement PI (proportionnel-intégral), avec une boucle proportionnelle 44 et une boucle intégratrice discrète 46, 50-56. Concrètement, un régulateur PI est suffisant parce que le modèle du transfert de la température peut être approximé comme étant un système linéaire du premier ordre donc facilement contrôlable par un simple PID même si ce modèle est inconnu.

Cette régulation opère à partir d'un signal d'erreur e correspondant à une différence entre la température observée, à savoir la température de puce θ°_{puce} (température de l'IMU 26, mesurée par le capteur 34) et une température de référence θ°_{ref} mémorisée en 48. Par exemple θ°_{ref} = 50°C, valeur supérieure à la température asymptotique et inférieure à la température maximale de l'IMU indiquée par les spécifications du fabricant.

Le système opère en temps discret, correspondant à un échantillonnage numérique. On peut alors assimiler l'intégrale à une somme du signal sur une période temporelle déterminée par le bloc 50, cette somme étant calculée par les blocs 52 à 56.

Les blocs 58 et 60 combinent les sorties des boucles proportionnelle et intégratrice 44 et 46 et ramènent le signal résultant à une plage de variation 0-100 % (pour permettre un contrôle par rapport cyclique). Le résultat est mémorisé dans un registre PWM 62 et appliqué en entrée (signal TH_PWM) au circuit de pilotage 36 du composant chauffant 28. On notera que dans les configurations de vol le refroidissement de la carte se fait naturellement par la platine 22, le rapport cyclique du signal PWM étant alors à 0%.

L'activation contrôlée du composant chauffant 36 permet de chauffer en tant que de besoin l'IMU pour atteindre et maintenir une température de référence la plus proche d'une valeur constante.

On accélère ainsi la montée en température et on atteint rapidement une température nominale de l'IMU 26 qui sera proche d'une asymptote assez stable, où les variations de biais seront minimisées et présenteront peu d'effet d'hystérésis.

Cette montée rapide en température va également être utilisée pour accélérer le processus de calibration.

En effet, la technique de calibration décrite dans l'article de Niu et al. donne une très bonne précision, mais souffre d'un défaut majeur, à savoir que pour une seule unité la calibration nécessite 3 heures, et une telle durée est rédhibitoire pour une production en grande série, avec une cadence élevée, même si l'on calibre plusieurs cartes simultanément.

Ainsi, de façon caractéristique de l'invention le composant chauffant est utilisé pour chauffer l'IMU pendant sa calibration en usine (ou lors d'une recalibration ultérieure).

Pour une calibration en usine, la carte est maintenue en position statique, sans la platine 22 (dont la présence aurait pour effet de ralentir la montée en température), et les biais des gyromètres et des accéléromètres sont mesurés pendant que la température augmente. L'IMU peut être par exemple chauffée en 150 secondes d'une température initiale de +30°C à une température finale de +65°C, soit un temps très inférieur aux 20 minutes envisagées par l'article précité de Niu et al. Pendant cette montée en température, le biais constaté est mémorisé pour chaque valeur de température (température de puce délivrée par le capteur 34), et la caractéristique biais/température obtenue est ensuite modélisée sous forme d'un polynôme, par exemple un polynôme du troisième ordre, par mise en œuvre d'une technique conventionnelle de régression polynomiale récursive, la récursivité évitant de devoir mémoriser l'ensemble des données.

On notera que l'on choisit une température de référence assez haute, ici +65°C, qui est une valeur plus élevée que la température de référence choisie pour la régulation thermique en vol (qui était de +50°C), tout en restant inférieure à la température maximale indiquée par le fabricant de l'IMU. Ceci permet d'obtenir un polynôme plus étendu : en effet quand pour la correction des valeurs on fait une interpolation polynomiale au-delà de la plage des valeurs l'erreur peut devenir considérable, selon le degré du polynôme. En résumé, i) on opère une calibration en usine permettant de corriger le biais des capteurs sur une plage +30°C/+60°C, et ii) en vol on régule autour de +50°C, de sorte que même si la température dépasse +50°C à un moment donné, les biais des capteurs seront toujours convenablement corrigés.

On a réalisé ainsi, de façon ultrarapide, une calibration statique des biais thermiques des gyromètres, et de même pour les biais des accéléromètres.

Cette calibration statique peut être avantageusement complétée par une calibration dynamique permettant de déterminer les facteurs d'échelle et les non-orthogonalités des capteurs. La calibration dynamique consiste à placer la carte sur un équipage mobile pour effectuer des rotations prédéterminées à vitesse constante selon les trois axes. Lors de cette calibration dynamique, le composant chauffant peut être désactivé. Pendant les rotations prédéterminées, les signaux délivrés par les capteurs de l'IMU sont relevés et une correction thermique leur est appliquée en fonction de la température de puce, cette correction thermique étant calculée à partir des valeurs de polynômes précédemment mémorisées lors de la calibration statique. Les données corrigées en température sont par exemple utilisées dans un algorithme général de type descente de gradient permettant de calibrer les données inertielles par rapport à une rotation théorique.

La durée de cette calibration dynamique est de l'ordre de 45 secondes, durée tout à fait compatible avec une production en usine à cadence élevée.

Dans le cas d'une recalibration ultérieure par l'utilisateur, la méthode est la même que pour la calibration statique initiale en usine. On notera que cette recalibration peut être faite aisément, sans démontage du drone (alors que la calibration en usine est faite sur la carte isolément), avec le drone dans son environnement, qu'elle peut être réitérée en tant que de besoin, et qu'elle ne dure qu'un temps très limité, de l'ordre de 2 à 3 minutes. Le refroidissement produit par la platine métallique 22, qui est présente lors de cette calibration ultérieure, a toutefois pour conséquence de réduire la température maximale et d'allonger le temps de calibration.

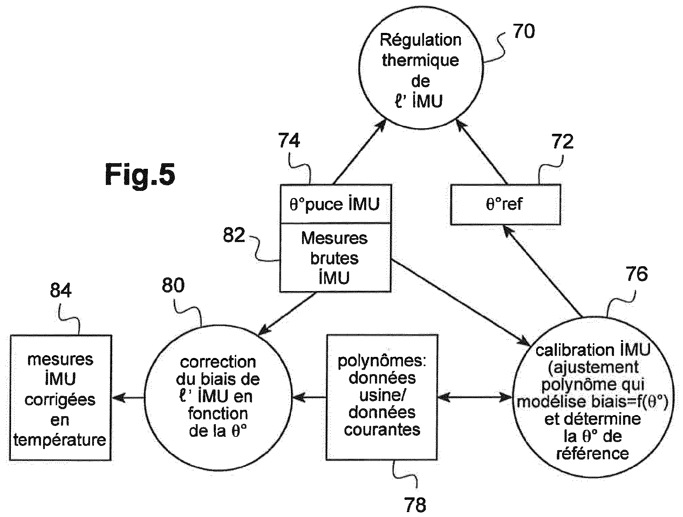

La Figure 5 est un diagramme explicitant les différents processus i) de calibration, ii) de régulation thermique et iii) de correction de biais mis en œuvre selon l'invention.

Le processus 70 de régulation thermique consiste à chauffer l'IMU par le composant chauffant 28 par l'intermédiaire de son circuit de pilotage 36 et de la chaine d'asservissement illustrée Figure 4. Les variables d'entrée sont la température de référence θ°_{ref} mémorisée en 72 et la température de puce θ°_{puce} de l'IMU délivrée en 74.

Le processus 76 de calibration de l'IMU consiste à calculer les dérives thermiques de l'IMU en trouvant le polynôme qui approche au mieux la caractéristique biais/température. Ce processus peut être réalisé en usine, ou bien réitéré par l'utilisateur s'il souhaite recalibrer l'IMU ultérieurement. Les données d'entrée/sortie sont le fichier 78 des paramètres des polynômes, obtenu par la calibration en usine, ainsi que le cas échéant ceux de la dernière recalibration effectuée. Ces fichiers conservent également des paramètres correspondant aux erreurs de facteurs d'échelle de l'IMU, qui peuvent être éventuellement utilisés en complément (on pourra se référer à cet égard à l'article de Niu et al. pour plus de détails).

Le processus 80 de correction du biais de l'IMU reçoit en entrée les mesures brutes de l'IMU délivrées en 82, la température interne θ°_{puce} de la puce de l'IMU délivrée en 74, et les données des polynômes de la caractéristique biais/température mémorisées en 78. La correction du biais est opérée sur la base de la température courante de la puce, et produit en 84 des mesures IMU corrigées de la température.

## Revendications

1. Un drone, comportant une carte de circuit principale (24) sur laquelle sont montés des composants électroniques ainsi qu'une centrale inertielle, IMU, (26) comprenant des capteurs gyrométriques de mesure des rotations instantanées du drone dans un repère absolu, et/ou des capteurs accélérométriques de mesure des accélérations du drone dans ce repère, l'IMU (26) incluant un capteur de température interne (34) délivrant un signal de température de puce (θ°_{puce}),
**caractérisé en ce qu'**il comprend :
- un composant chauffant (28) monté sur la carte de circuit (24) au voisinage de l'IMU (26) ;
- un guide thermique (30) incorporé à la carte de circuit (24), ce guide thermique s'étendant entre le composant chauffant (28) et l'IMU (26) de manière à permettre un transfert (32) à l'IMU de la chaleur produite par le composant chauffant ; et
- un circuit de régulation thermique (44-62), recevant en entrée le signal de température de puce (θ°_{puce}) et un signal de température de consigne prédéterminé (θ°_{ref}), et délivrant en sortie un signal de pilotage (TH_PWM) du composant chauffant, de manière à contrôler l'apport de chaleur à l'IMU en fonction de l'écart entre température de puce et température de consigne.

2. Le drone de la revendication 1, comprenant en outre :
- une mémoire (78) conservant des valeurs d'un polynôme approximant une caractéristique biais/température de puce de l'IMU ; et
- un circuit de correction d'erreur thermique (80), apte à appliquer aux signaux bruts (82) délivrés par les capteurs gyrométriques et/ou accélérométriques de l'IMU des corrections de biais en fonction de la température de puce, ces corrections étant basées sur les valeurs de polynôme conservées dans la mémoire.

3. Le drone de la revendication 1, dans lequel le guide thermique est une couche plane métallique (30) incorporée à la carte de circuit (24) et s'étendant sous l'IMU (26) et sous le composant chauffant (28).

4. Le drone de la revendication 3, dans lequel la couche plane métallique est un plan de masse électrique (GND_GYRO) de l'IMU et du composant chauffant, relié à la masse commune (GN_{D}) de la carte de circuit.

5. Le drone de la revendication 1, dans lequel le composant chauffant est un transistor bipolaire associé à un étage (38) de polarisation contrôlée de la base de ce transistor, en fonction du signal de pilotage (TH_PWM) délivré par le circuit de régulation thermique.

6. Le drone de la revendication 1, dans lequel le signal de pilotage (TH_PWM) délivré par le circuit de régulation thermique est un signal PWM dont le rapport cyclique est modulé en fonction de l'écart entre la température de puce et la température de consigne.

7. Un procédé de calibration de l'IMU (26) d'un drone selon la revendication 1, comprenant les étapes suivantes :
a) pilotage du composant chauffant (28) de manière à générer une rampe de température de puce variant progressivement d'une température initiale à une température finale ;
b) pendant cette rampe de température, relevé des valeurs de biais de l'IMU (26) pour une pluralité de valeurs de température de puce, et établissement d'une caractéristique biais/température ;
c) recherche d'un polynôme approximant au plus près la caractéristique obtenue à l'étape b) ; et
d) mémorisation des valeurs du polynôme trouvé à l'étape c), en tant que valeurs de correction de biais de l'IMU en fonction de la température de puce.

8. Le procédé de la revendication 7, dans lequel la température initiale est une température ambiante et la température finale est une température nominale de fonctionnement de l'IMU.

9. Le procédé de la revendication 7, dans lequel la durée de la rampe de température de l'étape b), de la température initiale à la température finale, est inférieure à 3 minutes.

10. Le procédé de la revendication 7, dans lequel l'étape b) est exécutée dans une configuration statique de l'IMU, et en ce qu'il est en outre prévu, après l'étape d), une calibration dynamique de l'IMU, comprenant des étapes de :
e) mise en place de la carte de circuit sur un support tournant et application de rotations prédéterminées à l'IMU ; et
f) pendant ces rotations prédéterminées, relevé des signaux bruts délivrés par les capteurs gyrométriques de l'IMU, et application à ces signaux bruts d'une correction thermique en fonction de la température de puce, ces corrections étant basées sur les valeurs de polynôme mémorisées à l'étape d).

11. Le procédé de la revendication 10, dans lequel le composant chauffant est désactivé pendant les étapes e) et f).

## Patentansprüche

1. Drohne, aufweisend eine Haupt-Leiterplatte (24), auf der elektronische Komponenten montiert sind, sowie eine inertiale Messeinheit, IMU, (26), die Drehbewegungsmesssensoren zum Messen der kurzzeitigen Drehungen einer Drohne in einem absoluten Bezugssystem und/oder Beschleunigungssensoren zum Messen der Beschleunigungen der Drohne in diesem Bezugssystem umfasst, wobei die IMU (26) einen Innentemperatursensor (34) umfasst, der ein Chip-Temperatur-Signal (θ°_{chip}) ausgibt,
**dadurch gekennzeichnet, dass** sie Folgendes umfasst:
- eine Heizkomponente (28), die auf der Leiterplatte (24) in der Nähe der IMU (26) montiert ist,
- einen thermischen Leiter (30), der in die Leiterplatte (24) eingearbeitet ist, wobei dieser thermische Leiter sich zwischen der Heizkomponente (28) und der IMU (26) so erstreckt, dass er einen Transfer (32) der von der Heizkomponente erzeugten Wärme ermöglicht; und
- eine Wärmeregelungsschaltung (44-62), die am Eingang das Chip-Temperatur-Signal (θ°_{Chip}) und ein vorher bestimmtes Soll-Temperatur-Signal (θ°_{Ref}) empfängt und am Ausgang ein Signal zum Ansteuern (TH_PWM) der Heizkomponente ausgibt, um die Wärmezufuhr zu der IMU in Abhängigkeit von der Abweichung zwischen Chip-Temperatur und Soll-Temperatur zu steuern.

2. Drohne nach Anspruch 1, ferner umfassend:
- einen Speicher (78), der Werte eines Polynoms abspeichert, die sich einer Verzerrungs-/Chip-Temperatur-Kennlinie der IMU annähern; und
- eine Schaltung zur Korrektur thermischer Fehler (80), die imstande ist, auf die von den Drehbewegungsmess- und Beschleunigungssensoren ausgegebenen Rohsignale (82) Verzerrungskorrekturen in Abhängigkeit von der Chip-Temperatur anzuwenden, wobei diese Korrekturen auf den im Speicher abgespeicherten Polynomwerten basieren.

3. Drohne nach Anspruch 1, wobei der thermische Leiter eine flächige Metallschicht (30) ist, die in die Leiterplatte (24) eingearbeitet ist und sich unter der IMU (26) und unter der Heizkomponente (28) erstreckt.

4. Drohne nach Anspruch 3, wobei die flächige Metallschicht eine elektrische Erdungsebene (GND_GYRO) der IMU und der Heizkomponente ist, die mit der gemeinsamen Masse (GND) der Leiterplatte verbunden ist.

5. Drohne nach Anspruch 1, wobei die Heizkomponente ein Bipolartransistor ist, der einer Stufe (38) der gesteuerten Polarisation der Basis dieses Transistors zugeordnet ist, in Abhängigkeit von dem Ansteuerungssignal (TH_PWM), das von der Wärmeregelungsschaltung ausgegeben wird.

6. Drohne nach Anspruch 1, wobei das Ansteuerungssignal (TH_PWM), das von der Wärmeregelungsschaltung ausgegeben wird, ein PWM-Signal ist, dessen zyklisches Verhältnis in Abhängigkeit von der Abweichung zwischen der Chip-Temperatur und der Soll-Temperatur moduliert ist.

7. Verfahren zum Kalibrieren der IMU (26) einer Drohne nach Anspruch 1, umfassend die folgenden Schritte:
a) Ansteuern der Heizkomponente (28), um eine Chip-Temperatur-Rampe zu erzeugen, die sich progressiv von einer Anfangstemperatur zu einer Endtemperatur verändert;
b) während dieser Temperatur-Rampe, Bestimmen der Verzerrungswerte der IMU (26) für eine Mehrzahl von Chip-Temperatur- Werten und Erstellen einer Verzerrungs-/Temperatur-Kennlinie;
c) Ermitteln eines Polynoms, das sich möglichst nahe der in Schritt b) erhaltenen Kennlinie annähert; und
d) Speichern der Werte des in Schritt c) ermittelten Polynoms als Verzerrungskorrekturwerte der IMU in Abhängigkeit von der Chip-Temperatur.

8. Verfahren nach Anspruch 7, bei dem die Anfangstemperatur eine Umgebungstemperatur ist und die Endtemperatur eine Nennbetriebstemperatur der IMU ist.

9. Verfahren nach Anspruch 7, bei dem die Dauer der Temperaturrampe in Schritt b), von der Anfangstemperatur zu der Endtemperatur, kleiner als 3 Minuten ist.

10. Verfahren nach Anspruch 7, bei dem der Schritt b) in einer statischen Konfiguration der IMU ausgeführt wird, und dadurch dass ferner nach Schritt d) eine dynamische Kalibrierung der IMU vorgesehen ist, umfassend die Schritte:
e) Anordnen der Leiterplatte auf einem Drehträger und Aufbringen von vorher bestimmten Drehungen auf die IMU; und
f) während dieser vorher bestimmten Drehungen Bestimmen der von den Drehbewegungsmesssensoren der IMU ausgegebenen Rohsignale und Anwenden einer thermischen Korrektur in Abhängigkeit von der Chip-Temperatur auf diese Rohsignale, wobei diese Korrekturen auf den in Schritt d) gespeicherten Polynomwerten basieren.

11. Verfahren nach Anspruch 10, bei dem die Heizkomponente während der Schritte e) und f) deaktiviert ist.

## Claims

1. A drone, comprising a main circuit board (24) on which are mounted electronic components as well as an inertial unit, IMU, (26) comprising gyrometric sensors for measuring instantaneous rotations of the drone in an absolute reference frame, and/or accelerometric sensors for measuring accelerations of the drone in said reference frame, the IMU (26) including an internal temperature sensor (34) issuing a chip temperature signal (θ°_{puce}),
**characterized in that** it comprises:
- a heating component (28) mounted on the circuit board (24) near the IMU (26);
- a thermal guide (30) incorporated to the circuit board (24), said thermal guide extending between the heating component (28) and the IMU (26) so as to allow a transfer (32) to the IMU of the heat produced by the heating component; and
- a thermal regulation circuit (44-62), receiving as an input the chip temperature signal (θ°_{puce}) and a predetermined set-point temperature signal (θ°_{ref}), and outputting a heating component piloting signal (TH_PWM), so as to control the heat supply to the IMU according to the difference between chip temperature and set-point temperature.

2. The drone of claim 1, further comprising:
- a memory (78) storing values of a polynomial approximating a bias/chip temperature characteristic of the IMU; and
- a thermal error correction circuit (80), adapted to apply to the raw signals (82) issued by the gyrometric and/or accelerometric sensors of the IMU bias corrections according to the chip temperature, said corrections being based on the values of the polynomial stored in the memory.

3. The drone of claim 1, wherein the thermal guide is a metal planar layer (30) incorporated to the circuit board (24) and extending under the IMU (26) and under the heating component (28).

4. The drone of claim 3, wherein the metal planar layer is an electric ground plane (GND_GYRO) of the IMU and of the heating component, connected to the common ground (GND) of the circuit board.

5. The drone of claim 1, wherein the heating component is a bipolar transistor combined to a stage (38) controlling the polarization of the base of said transistor according to the piloting signal (TH_PWM) issued by the thermal regulation circuit.

6. The drone of claim 1, wherein the piloting signal (TH_PWM) issued by the thermal regulation circuit is a PWM signal the duty cycle of which is modulated according to the difference between the chip temperature and the set-point temperature.

7. A method for calibrating the IMU (26) of a drone according to claim 1, comprising the following steps:
a) piloting the heating component (28) so as to generate a chip temperature ramp which progressively varies from an initial temperature to a final temperature;
b) during said temperature ramp, reading bias values of the IMU (26) for a plurality of chip temperature values, and establishing a bias/temperature characteristic;
c) searching for a polynomial most closely approximating the characteristic obtained at step b); and
d) storing the values of the polynomial found at step c) as values of IMU bias correction according to the chip temperature.

8. The method of claim 7, wherein the initial temperature is an ambient temperature and the final temperature is a nominal operation temperature of the IMU.

9. The method of claim 7, wherein the duration of the temperature ramp of step b), from the initial temperature to the final temperature, is less than 3 minutes.

10. The method of claim 7, wherein step b) is executed in a static configuration of the IMU, and wherein after step d) a dynamic calibration of the IMU is further provided, comprising the steps of:
e) placing the circuit board on a rotating support and applying predetermined rotations to the IMU; and
f) during said predetermined rotations, reading the raw signals issued by the gyro sensors of the IMU, and applying to said raw signals a thermal correction according to the chip temperature, said corrections being based on the values of the polynomial stored at step d).

11. The method of claim 10, wherein the heating component is deactivated during steps e) and f).
